(19) Europäisches Patentamt
European Patent Office
Office européen des brevets

(11) **EP 1 807 957 B1**

(12) **FASCICULE DE BREVET EUROPEEN**

(45) Date de publication et mention
de la délivrance du brevet:
**07.12.2011 Bulletin 2011/49**

(21) Numéro de dépôt: **05797150.9**

(22) Date de dépôt: **17.10.2005**

(51) Int Cl.:
*H04L 1/06* (2006.01)    *H04L 1/00* (2006.01)

(86) Numéro de dépôt international:
**PCT/EP2005/055321**

(87) Numéro de publication internationale:
**WO 2006/048374 (11.05.2006 Gazette 2006/19)**

(54) **PROCEDE DE RECEPTION ITERATIF POUR SYSTEME DE TYPE MIMO, RECEPTEUR ET PROGRAMME D'ORDINATEUR CORRESPONDANTS**

ITERATIVES EMPFANGSVERFAHREN FÜR EIN MIMO-SYSTEM UND ENTSPRECHENDER EMPFÄNGER UND COMPUTERPROGRAMM

ITERATIVE RECEIVING METHOD FOR A MIMO SYSTEM, AND CORRESPONDING RECEIVER AND COMPUTER PROGRAM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2004 FR 0411787**

(43) Date de publication de la demande:
**18.07.2007 Bulletin 2007/29**

(73) Titulaire: **FRANCE TELECOM**
**75015 Paris (FR)**

(72) Inventeurs:
• **BOUVET, Pierre-Jean**
  **F-14000 Caen (FR)**
• **HELARD, Maryline**
  **F-35700 RENNES (FR)**
• **LE NIR, Vincent**
  **F-61100 FLERS (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 1 453 262         WO-A-2004/057765**
**US-A1- 2004 161 058     US-B1- 6 813 219**

• **KADEL G: "Diversity and equalization in frequency domain a robust and flexible receiver technology for broadband mobile communication systems" VEHICULAR TECHNOLOGY CONFERENCE, 1997, IEEE 47TH PHOENIX, AZ, USA 4-7 MAY 1997, NEW YORK, NY, USA,IEEE, US, vol. 2, 4 mai 1997 (1997-05-04), pages 894-898, XP010228972 ISBN: 0-7803-3659-3**
• **XIAOQIANG MA ET AL: "An em-based channel estimation algorithm for space-time and space-frequency block coded ofdm" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, vol. VOL. 1 OF 6, 6 avril 2003 (2003-04-06), pages IV389-IV392, XP010641178 ISBN: 0-7803-7663-3**

## Description

### 1. Domaine de l'invention

Le domaine de l'invention est celui des communications numériques. Plus précisément, l'invention concerne une technique de réception itérative pour un système de communications numériques comprenant, à l'émission, un codage de canal et un multiplexage spatial, dans un contexte de transmission à plusieurs antennes, encore appelé MIMO (pour "Multiple Input Multiple Output", "Entrées Multiples Sorties Multiples").

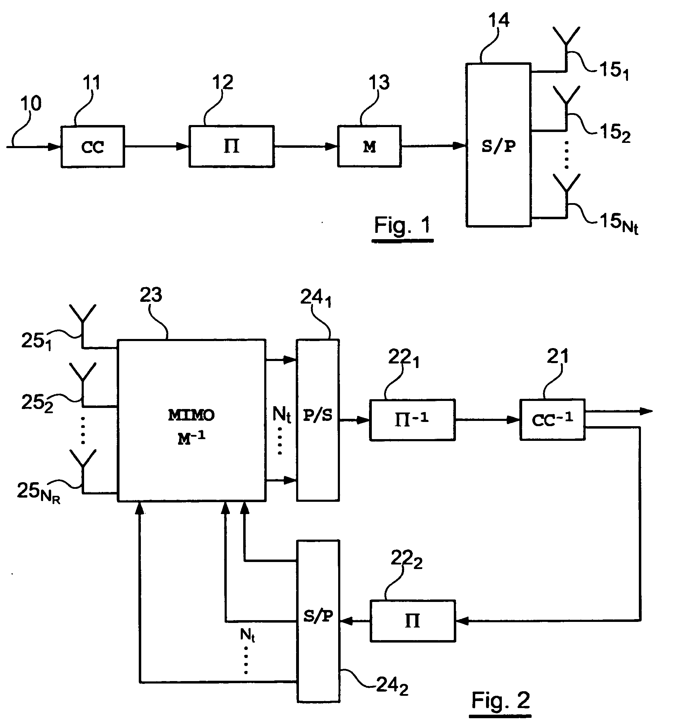

L'invention concerne plus particulièrement, mais non exclusivement, une technique de réception d'un signal émis selon le schéma d'émission proposé par A. M. Tonello dans "Space-Time Bit-Interleaved Coded Modulation with an Iterative Decoding Strategy" (en français "modulations codées espace-temps avec une stratégie de décodage itérative"), Proceedings of VTC Fall'00, Boston, USA, septembre 2000. Un tel schéma d'émission, plus couramment appelé ST-BICM, est illustré en figure 1.

Le signal 10 à émettre subit un codage de canal CC 11, puis un entrelacement $\pi$ 12. Il traverse ensuite un module de "mapping" M 13, destiné à convertir des éléments binaires en symboles complexes : un tel module associe ainsi un groupe de bits à un symbole complexe appartenant à une constellation (de type QPSK, 64QAM, etc.). La suite de symboles délivrée en sortie du module dé mapping M 13 est couramment appelée signal M-aire. On procède ensuite à une conversion Série-Parallèle S/P 14, permettant de démultiplexer chaque symbole issu du module de mapping M 13 sur les différentes antennes d'émission $15_1$, $15_2$ à $15_{Nt}$.

Selon cette technique de modulation ST-BICM, des symboles différents sont donc simultanément. émis sur chacune des $N_t$ antennes d'émission. En réception, chacune des $N_R$ antennes de réception, où $N_R \geq N_t$, reçoit une combinaison linéaire des symboles émis, affectée des perturbations et interférences liées au canal de transmission.

### 2. Solutions de l'art antérieur

Le récepteur associé à ce schéma d'émission ST-BICM, proposé par Tonello dans l'article précité, est itératif, comme illustré en figure 2. Il est alimenté par les signaux reçus sur chacune des $N_R$ antennes de réception, référencées $25_1$, $25_2$ à $25_{NR}$, et comprend un premier module de « MIMO demapping » espace-temps 23 (MIMO $M^{-1}$) utilisant un algorithme de type maximum de vraisemblance MV ou ML (pour "Maximum Likelihood"), analysant notamment les rapports de vraisemblance LLR (de l'anglais « log likelihood ratio ») sur chaque bit codé. Un tel module de « demapping » $M^{-1}$ 23 met en oeuvre une opération sensiblement inverse de celle du module de « mapping » M 13, et compte $N_t$ sorties, où $N_t$ est le nombre d'antennes d'émission, qui alimentent un module de conversion parallèle/série P/S $24_1$, puis un module de désentrelacement $22_1$.

Les rapports de vraisemblance issus du module de MIMO demapping $M^{-1}$ 23 sont ensuite améliorés via un décodeur de canal $CC^{-1}$ 21 de type SOVA (de l'anglais « Soft Output Viterbi Algorithm » pour « algorithme de Viterbi à sortie souple ») et envoyés de nouveau au module de « MIMO demapping »- $M^{-1}$ 23, après un nouvel entrelacement $\pi$ $22_2$, et une nouvelle conversion série/ parallèle S/P $24_2$. Ce processus est réitéré afin d'améliorer les données décodées.

Selon cette technique de réception, on essaye donc de retrouver par maximum de vraisemblance quel symbole de la constellation a été émis sur chacune des antennes. L'utilisation d'un tel récepteur passe par une phase préalable d'initialisation, au cours de laquelle on estime chacun des canaux de transmission entre les $N_t$ antennes d'émission et les $N_R$ antennes de réception en émettant des symboles connus a priori du récepteur.

### 3. Inconvénients de l'art antérieur

Un inconvénient de cette technique itérative de l'art antérieur est sa complexité de mise en oeuvre, du fait de l'utilisation d'un algorithme de type maximum de vraisemblance en réception. En effet, un tel algorithme consiste à calculer de façon exhaustive toutes les séquences de symboles reçus possibles, et à sélectionner, parmi ces séquences, la plus vraisemblable. La complexité d'un tel algorithme augmente exponentiellement en fonction du nombre d'antennes d'émission, du nombre d'antennes de réception et de la taille de la constellation utilisée (ou encore du nombre d'états de la modulation).

On connaît aussi la demande de brevet US 2004/161058 (EBIKO) qui décrit une technique de réception itérative d'un signal ayant subi, à l'émission, un codage espace-temps. Une telle technique de réception ne met en oeuvre qu'une antenne de réception et n'exploite donc pas la diversité d'antennes en réception dans un système de type MIMO.

### 4. Objectifs de l'invention

L'invention a notamment pour objectif de pallier ces inconvénients de l'art antérieur.

Plus précisément, un objectif de l'invention est de fournir une technique de réception pour un système à modulation codée espace-temps qui soit plus simple que la technique de réception itérative proposée par A. M. Tonello dans "Space-Time Bit-Interleaved Coded Modulation with an Iterative Decoding Strategy" (en français "modulations codées espace-temps avec une stratégie de décodage itérative"), Proceedings of VTC Fall'00, Boston, USA, septembre 2000.

Un autre objectif de l'invention est de proposer une telle technique de réception itérative qui soit bien adaptée aux modulations de type ST-BICM et plus généralement aux systèmes de transmission de type MIMO.

L'invention a encore pour objectif de fournir une telle technique qui reste de complexité réduite (qui présente par exemple une complexité linéaire), même lorsque le nombre d'antennes d'émission et/ou de réception est élevé et/ou que la taille de la constellation utilisée est grande.

L'invention a aussi pour objectif de proposer une telle technique qui puisse être implémentée dans des récepteurs d'architecture plus simple que les récepteurs de l'art antérieur. Notamment, un objectif de l'invention est de fournir un récepteur qui comprenne moins de modules élémentaires (du type décodeur de canal, désentrelaceur, etc.) fonctionnant en parallèle qu'il n'existe d'antennes d'émission dans le système.

Un objectif secondaire de l'invention est de fournir une telle technique qui soit aussi bien adaptée aux canaux de transmission ne présentant pas d'interférences entre symboles qu'aux canaux sélectifs en fréquence.

L'invention a enfin pour objectif de proposer une telle technique de réception qui présente des performances au moins équivalentes à celles des techniques plus complexes de l'art antérieur.

## 5. Caractéristiques essentielles de l'invention

Ces objectifs, ainsi que d'autres qui apparaîtront par la suite, sont atteints à l'aide d'un procédé de réception d'un signal de données, mettant en oeuvre $N_R$ antennes de réception, où $N_R$ est supérieur ou égal à 2, ledit signal de données ayant subi, avant émission, un codage de canal et un multiplexage spatial, et étant émis sur $N_T$ antennes d'émission, où $N_T$ est supérieur ou égal à 2, chacune desdites antennes émettant une partie dudit signal, ledit procédé de réception mettant en oeuvre une étape d'estimation du canal de transmission entre lesdites antennes d'émission et lesdites antennes de réception.

Selon l'invention, un tel procédé de réception comprend au moins une itération d'amélioration d'une estimation du signal reçu, en fonction dudit signal reçu et d'une estimation précédente dudit signal reçu, ladite itération comprenant des étapes de :

- filtrage dudit signal reçu, délivrant un signal filtré ;
- détermination d'une interférence affectant ledit signal reçu, mettant en oeuvre une multiplication de ladite estimation précédente dudit signal reçu par une matrice représentative d'interférences dues au canal de transmission dudit signal reçu, dite matrice d'interférences J, ladite détermination délivrant une interférence estimée ;
- soustraction de ladite interférence estimée audit signal filtré, de façon à obtenir un signal amélioré ;
- égalisation dudit signal amélioré, délivrant un signal égalisé ;

- estimation, à partir dudit signal égalisé, du signal de données émis, appelé signal estimé.

Ainsi, l'invention repose sur une approche tout à fait nouvelle et inventive de la réception d'un signal de données ayant subi à l'émission un codage de canal, et un multiplexage spatial, dans un système de communications numériques de type MIMO présentant $N_t$ antennes d'émission et $N_R$ antennes de réception.

En effet, l'invention propose une technique de réception beaucoup plus simple que les techniques de l'art antérieur puisque elle ne met pas en oeuvre une égalisation MIMO à maximum de vraisemblance ML, comme proposé par Tonello dans l'article précité, mais repose sur une égalisation linéaire à base de filtres. Grâce à cette complexité réduite, elle est donc beaucoup mieux adaptée aux systèmes MIMO présentant un grand nombre d'antennes d'émission et/ou de réception, et aux constellations de grande taille, présentant un nombre d'états de modulation élevé.

En outre, selon la technique de réception de l'invention, il n'est pas nécessaire de réaliser autant de décodages de canal qu'il existe d'antennes d'émission, un seul décodage de canal en bloc étant suffisant.

Enfin, la technique de l'invention est moins complexe qu'une technique de réception itérative adaptée à un système d'émission mettant en oeuvre un précodage linéaire du signal de données. On notera en effet que le signal reçu selon l'invention n'a pas subi de précodage avant émission, de sorte que le procédé de réception de l'invention ne met pas en oeuvre de "déprécodage" du signal reçu (par "déprécodage" on entend ici et dans toute la suite du document l'opération inverse de l'opération de précodage réalisée à l'émission).

La technique de réception de l'invention repose plus précisément sur une égalisation MIMO linéaire à annulation d'interférences, selon laquelle on reconstruit les interférences affectant le signal reçu, en utilisant notamment le codage de canal, pour ensuite les soustraire au signal filtré, de façon à obtenir un signal amélioré. L'estimation de l'interférence se fait de manière itérative, en prenant en compte une estimation précédente du signal reçu. Le signal amélioré est ensuite égalisé, puis estimé. Cette estimation du signal sert alors à la prochaine itération d'amélioration.

L'estimation des interférences met en oeuvre une matrice d'interférences qui, par exemple, tient compte uniquement de la matrice représentative du canal de transmission, par opposition au cas où le signal subirait un précodage linéaire avant émission, dans lequel la matrice d'interférences serait alors également fonction d'une matrice de déprécodage.

La matrice représentative du canal de transmission, encore appelée matrice équivalente de canal, peut notamment prendre en compte un multiplexage spatial et/ou temporel mis en oeuvre à l'émission. Dans un système de type MIMO, elle prend également en compte l'interférence entre symboles due aux différents trajets dans le canal de propagation.

Avantageusement, ledit filtrage dudit signal reçu met en oeuvre une multiplication dudit signal reçu par une matrice transposée conjuguée $H^H$ d'une matrice représentative dudit canal de transmission H.

De manière préférentielle, la première itération d'amélioration met en oeuvre une estimation initiale dudit signal reçu comprenant des étapes de :

- égalisation initiale dudit signal reçu par multiplication d'une matrice d'égalisation globale tenant compte au moins de ladite matrice représentative dudit canal de transmission H, délivrant un signal initial égalisé ;
- estimation initiale dudit signal reçu à partir dudit signal initial égalisé.

Il est en effet nécessaire d'initialiser le processus itératif de l'invention, aucun signal M-aire précédemment estimé n'étant encore disponible. Le résultat de cette estimation initiale alimente ensuite les itérations suivantes du procédé.

Préférentiellement, lorsque ledit canal de transmission est sélectif en fréquence, ledit signal de données émis sur chacune desdites antennes d'émission est un signal multiporteuses et ladite itération comprend une étape préliminaire de démodulation multiporteuses sur chacune desdites antennes de réception.

En effet, en réalisant une modulation multiporteuse avant émission et une démodulation multiporteuse en réception, on obtient un canal équivalent à un canal non sélectif en fréquence pour chaque sous-porteuse de la modulation, dans lequel le signal de données ne subit donc pas ou peu d'interférences entre symboles.

Avantageusement, au moins une desdites étapes d'estimation du signal reçu délivre d'une part une estimation binaire dudit signal reçu, et d'autre part une estimation pondérée dudit signal reçu, ladite estimation pondérée étant utilisée pour l'itération suivante, si cette dernière existe.

En fonction de l'application considérée, on peut extraire et utiliser une telle estimation binaire du signal reçu à chaque itération du procédé (à des fins statistiques par exemple, ou pour alimenter un bloc de traitement particulier), ou seulement à certains rangs de l'itération, par exemple en fin du processus itératif.

Selon une caractéristique préférentielle, un tel procédé de réception comprend également une étape d'estimation d'un bruit affectant ledit canal de transmission, et, lorsque ladite égalisation est de type MMSE ("Minimum Mean Square Error" pour "erreur quadratique moyenne minimale"), ladite matrice d'égalisation globale tient aussi compte dudit bruit estimé.

Selon une variante avantageuse, ladite égalisation est de type "Zero Forcing" (ZF pour "forçage à zéro"), qui constitue une alternative intéressante à l'égalisation MMSE du fait de sa moindre complexité.

De manière avantageuse, un tel procédé de réception comprend également au moins une étape de contrôle automatique de gain (CAG) précédant lesdites étapes d'égalisation, ce qui permet d'améliorer les performances du procédé itératif de l'invention.

L'invention concerne aussi un récepteur d'un signal de données, mettant en oeuvre le procédé de réception itératif décrit ci-dessus. Un tel récepteur comprend notamment des moyens d'amélioration d'une estimation du signal reçu, en fonction dudit signal reçu et d'une estimation précédente dudit signal reçu, comprenant au moins deux modules élémentaires pilotés successivement, chacun desdits modules élémentaires comprenant :

- des moyens de filtrage dudit signal reçu, délivrant un signal filtré ;
- des moyens de détermination d'une interférence affectant ledit signal reçu, mettant en oeuvre une multiplication de ladite estimation précédente dudit signal reçu par une matrice représentative d'interférences dues au canal de transmission dudit signal reçu, dite matrice d'interférences J, lesdits moyens de détermination délivrant une interférence estimée ;
- des moyens de soustraction de ladite interférence estimée audit signal filtré, de façon à obtenir un signal amélioré ;
- des moyens d'égalisation dudit signal amélioré, délivrant un signal égalisé ;
- des moyens d'estimation, à partir dudit signal égalisé, du signal de données émis, appelé signal estimé.

L'invention concerne encore un produit programme d'ordinateur comprenant des séquences d'instructions adaptées à la mise en oeuvre d'un procédé de réception tel que décrit précédemment lorsque ledit programme est exécuté sur un ordinateur.

## 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1, déjà commentée en relation avec l'art antérieur, présente un synoptique d'un schéma d'émission de type ST-BICM, tel que proposé par Tonello dans l'article précité ;
- la figure 2, également commentée en relation avec l'art antérieur, illustre l'architecture d'un récepteur itératif proposé par Tonello dans l'article précité adapté au schéma d'émission de la figure 1 ;
- la figure 3 présente un synoptique du principe de réception itératif de l'invention ;
- la figure 4 illustre les différents modules élémentaires d'un récepteur mettant en oeuvre le principe de réception de la figure 3 ;

- la figure 5 présente le module élémentaire du récepteur de la figure 4 mis en oeuvre lors de la première itération d'amélioration de l'estimation du signal reçu ;
- la figure 6 présente un module élémentaire du récepteur de la figure 4 mis en oeuvre lors d'une itération d'amélioration suivante ;
- les figures 7 et 8 présentent respectivement des variantes des schémas d'émission et de réception dans le cas d'un canal sélectif en fréquence ;
- la figure 9 illustre la notion de canal de transmission dans un système de type MIMO ;
- la figure 10 présente les performances d'un récepteur itératif de l'invention.

## 7. Description d'un mode de réalisation de l'invention

Le principe général de l'invention repose sur une réception itérative d'un signal de données, ayant subi un codage de canal (mais pas de précodage), dans un système de type MIMO, mettant en oeuvre une estimation itérative des interférences engendrées par le codage de canal. L'interférence estimée, reconstruite à partir d'une estimation précédente, est ensuite soustraite au signal reçu, de manière à éliminer sa contribution. On procède ainsi à une égalisation linéaire du signal reçu, qui est peu complexe à implémenter.

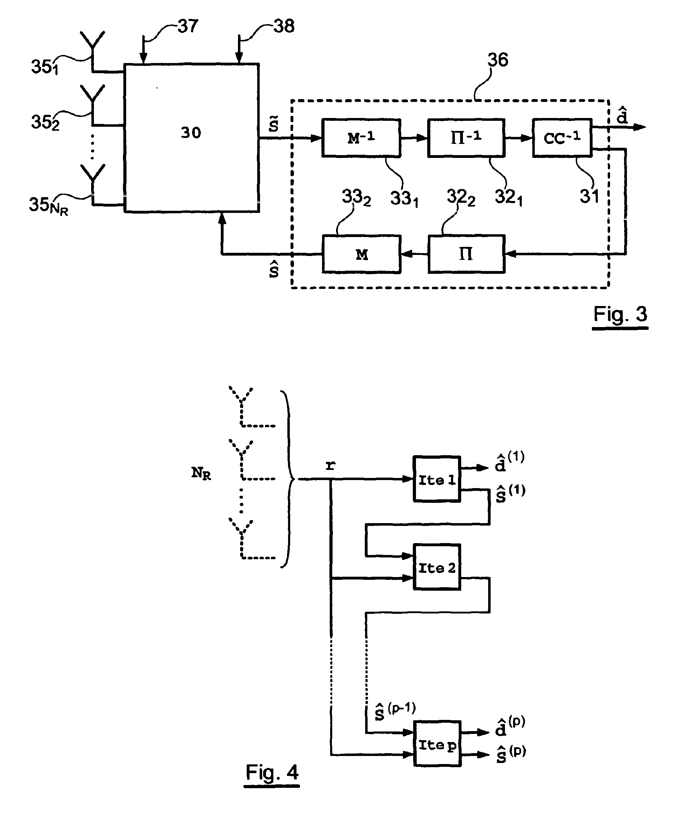

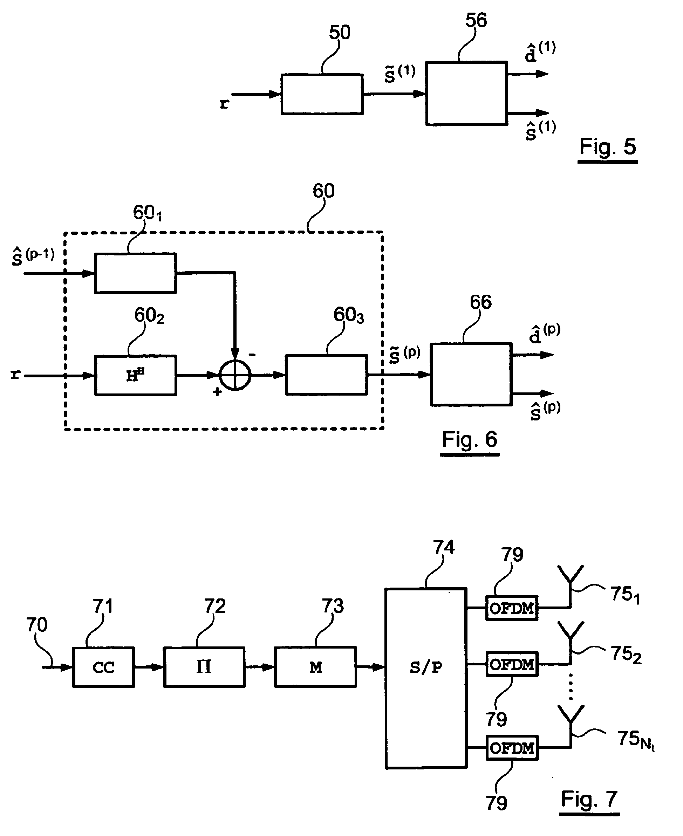

On notera que les éléments figurant sur les figures 1 à 9 sont référencés de la manière suivante : le premier chiffre de référence indique le numéro de la figure. Les chiffres suivants de la référence désignent l'élément au sein de la figure, un même élément étant généralement numéroté de la même façon dans les différentes figures. A titre d'exemple, un bloc d'estimation de symboles 36 dans la figure 3 est désigné par la référence 56 dans la figure 5 et par la référence 66 dans la figure 6.

On présente, en relation avec la figure 3, le principe de réception itératif de l'invention.

Un signal r est reçu sur $N_R$ antennes de réception référencées $35_1$ à $35_{NR}$. Un tel signal a subi, à l'émission, un codage de canal et un multiplexage spatial, et a été émis sur $N_t$ antennes d'émission, ou $N_R \geq N_t$, comme illustré par exemple sur la figure 2 décrite précédemment.

Chaque antenne de réception $35_1$ à $35_{N_R}$ reçoit une combinaison linéaire des symboles émis sur chacune des $N_t$ antennes d'émission.

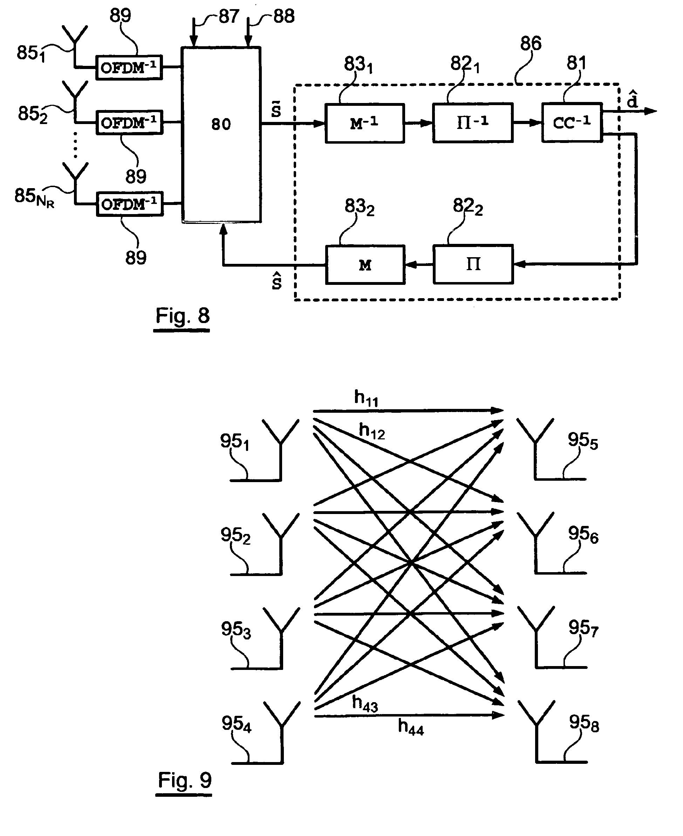

On suppose tout d'abord, dans l'exemple de la figure 3, que le canal MIMO est non sélectif en fréquence, de sorte que le signal n'est pas affecté par des interférences entre symboles (IES, ou en anglais ISI pour "Inter Symbol Interference"). On décrira par la suite en relation avec les figures 7 et 8 une variante de réalisation de l'invention dans le cas où cette hypothèse n'est pas vérifiée.

Le procédé de réception de l'invention consiste à procéder de manière itérative et à réaliser tout d'abord une égalisation MIMO 30, puis une estimation de symboles 36.

A l'initialisation du système de réception de la figure 3, on peut par exemple émettre sur les $N_t$ antennes d'émission des symboles connus a priori du récepteur, afin d'estimer les fonctions de transfert des différents canaux de transmission entre chacune des $N_t$ antennes d'émission et $N_R$ antennes de réception. Le résultat de cette estimation de canal 37 alimente alors le bloc d'égalisation MIMO 30. Une telle estimation de canal est réalisée au moyens d'algorithmes classiques bien connus de l'Homme du Métier qui ne sont donc pas décrits ici plus en détail.

Un tel bloc d'égalisation MIMO 30 peut utiliser différentes techniques d'égalisation, qui seront décrites plus en détail dans la suite de ce document. Lorsque la technique misé en oeuvre dans le bloc d'égalisation référencé 30 est de type MMSE (pour "Minimum Mean Square Error", "erreur quadratique moyenne minimum"), il est également nécessaire de fournir à ce bloc d'égalisation 30 une estimation du bruit 38 (sous la forme d'un rapport signal à bruit (ou SNR) par exemple). Une telle estimation du bruit est également classique et bien connue de l'Homme du Métier et la méthode utilisée pour cette estimation ne sera donc pas décrite ici plus en détails.

Le bloc d'égalisation MIMO 30 délivre en sortie un signal M-aire égalisé $\tilde{s}$. On rappelle que par signal M-aire on entend une suite de symboles complexes appartenant à une constellation (de type QPSK, 16QAM, etc.).

Ce signal égalisé alimente ensuite un bloc d'estimation de symboles 36, au sein duquel il subit des opérations de "demapping" $M^{-1}$ $33_1$, de désentrelacement $\pi^{-1}$ $32_1$ et de décodage de canal $CC^{-1}$ 31. En sortie de cette estimation de symboles 36, on obtient un signal binaire estimé $\hat{d}$, qui peut ou non être exploité, selon l'application envisagée.

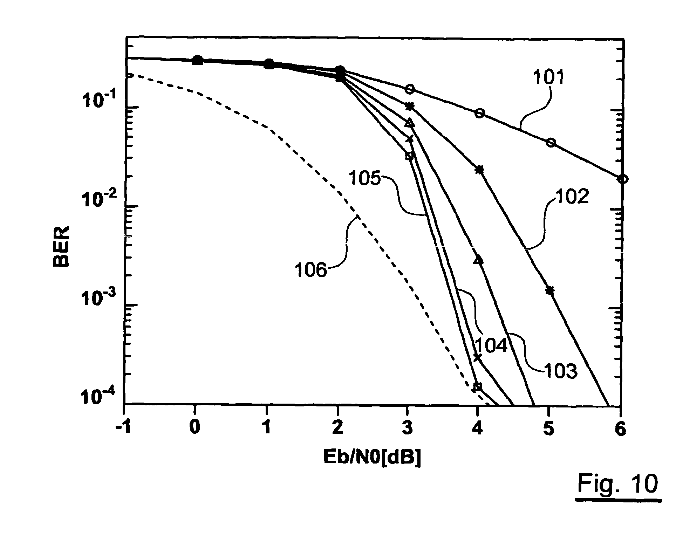

Le procédé étant itératif, on fait subir à ce signal binaire estimé $\hat{d}$ un nouvel entrelacement $\pi$ $32_2$ et un nouveau "mapping" M $33_2$, afin d'obtenir un signal M-aire estimé $\hat{s}$, que l'on peut réinjecter dans le bloc 30 d'égalisation MIMO pour une itération suivante d'amélioration de l'estimation du signal reçu. Ce signal $\hat{s}$ peut aussi être extrait pour subir des traitements successifs lorsqu'on met fin aux itérations successives du procédé de réception, une qualité de signal suffisante ayant été atteinte (par exemple au bout de 5 itérations, comme illustré par les courbes de simulation de la figure 10).

La figure 4 illustre plus précisément l'architecture d'un récepteur selon l'invention. Un tel récepteur est de type itératif, et est constitué de p modules élémentaires (p>1) référencés *Ite*1, *Ite*2 à *Ite*p.

Comme décrit précédemment en relation avec la figure 3, un signal r est reçu sur les $N_R$ antennes de réception du système MIMO considéré. Il alimente le premier module élémentaire *Ite*1 du récepteur, illustré en figure 5, dans lequel il subit la première itération (p=1) du procédé de réception de l'invention. Cette première itération consiste en une phase d'initialisation, aucun signal M-aire estimé n'étant encore disponible, et comprend donc les étapes suivantes :

- on procède tout d'abord à l'égalisation globale 50 du signal reçu r par multiplication par une matrice d'égalisation globale $(G + \sigma^2 I)^{-1}H^H$, où **H** désigne la matrice représentative du canal de transmission, $\sigma^2 = 1/SNR$ est la variance du bruit équivalent, également égale à l'inverse du rapport signal à bruit moyen observé sur chaque antenne de réception (SNR), et où $G = H^H \cdot H$ est une matrice d'égalisation globale. Cette égalisation 50 délivre un signal M-aire égalisé $\tilde{\mathbf{s}}^{(1)}$. On notera qu'on considère ici une égalisation de type MMSE, d'autres types d'égalisation étant décrits plus loin dans ce document ;
- le signal M-aire égalisé $\tilde{\mathbf{s}}^{(1)}$ alimente ensuite un bloc d'estimation 56 du signal binaire et du signal M-aire qui, à partir du signal M-aire égalisé, délivre un signal binaire estimé $\hat{d}^{(1)}$ (qui peut ne pas être exploité, et n'est donc pas forcément disponible en sortie) et un signal M-aire estimé $\hat{s}^{(1)}$.

Le signal M-aire estimé $\hat{s}^{(1)}$ est ensuite injecté dans le module élémentaire suivant *Ite2.* La figure 6 illustre la structure d'un module élémentaire *Itep,* où p>1, qui comprend un premier bloc 60 d'égalisation globale et un deuxième bloc 66 d'estimation de symboles.

Le bloc d'égalisation globale 60 reçoit en entrée le signal M-aire estimé $\hat{s}^{(p-1)}$ issu de l'itération précédente et le signal reçu **r**. Il réalise les opérations suivantes :

- filtrage adapté $60_2$ du signal reçu **r** par application de la matrice transconjuguée du canal $H^H$ délivrant un signal filtré ;
- création $60_1$ des interférences à partir d'un signal M-aire estimé précédent $\hat{s}^{(p-1)}$ par multiplication à gauche de ce signal M-aire estimé précédent par une matrice d'interférences $J = G\text{-}diag(G)$. Plus généralement, cette matrice d'interférences doit au moins tenir compte de la matrice de canal **H**;
- soustraction des interférences obtenues en sortie du bloc référencé $60_1$ au signal filtré obtenu en sortie du bloc de filtrage $60_2$ pour obtenir un signal amélioré ;
- égalisation $60_3$ du signal amélioré délivrant un signal M-aire égalisé $\tilde{s}^{(p)}$ par application de la matrice $(diag(G) + \sigma^2 I)^{-1}$. Plus généralement, cette matrice d'égalisation doit au moins tenir compte de la matrice de canal **H**.

Le signal M-aire égalisé $\tilde{\mathbf{s}}^{(p)}$ alimente ensuite le bloc d'estimation 66 qui réalise l'estimation :

- du signal binaire émis, appelé signal binaire estimé $\hat{d}^{(p)}$;

- du signal M-aire émis appelé signal M-aire estimé $\hat{s}^{(p)}$.

Le mode de réalisation décrit ci-dessus repose sur la mise en oeuvre d'une égalisation de type MMSE. Cependant d'autres types d'égalisation peuvent également être utilisées dans le cadre de l'invention. Ainsi, l'égalisation ZF (pour "Zéro Forcing", "forçage à zéro") constitue une alternative intéressante car moins complexe. Dans ce cas, le bloc d'égalisation 50 du premier module élémentaire *Ite*1 pour la première itération met en oeuvre l'égalisation du signal reçu r par multiplication d'une matrice d'égalisation globale $G^{-1}H^H$ (qui tient donc compte au moins de la matrice du canal **H**, mais plus du bruit) et délivre un signal M-aire égalisé $\tilde{s}^{(1)}$. De même, dans les modules élémentaires *Itep,* où p>1, le bloc d'égalisation $60_3$ du signal amélioré procède désormais à l'égalisation du signal amélioré par application de là matrice $(diag(G))^{-1}$, pour délivrer en sortie un signal M-aire égalisé $\tilde{s}^{(p)}$.

Les autres blocs fonctionnels du récepteur décrit précédemment dans le cadre d'une égalisation MMSE demeurent inchangés.

On peut également prévoir l'utilisation d'égalisations de type MRC ("Maximum Ratio Combining") ou EGC ("Equal Gain Combining"), qui sont bien connues de la littérature.

Il est encore possible d'améliorer les performances du procédé itératif de l'invention en mettant en oeuvre un contrôle automatique de gain (CAG), avant les étapes d'égalisation décrites précédemment.

Le CAG a notamment pour but de normaliser l'énergie du signal pour la rendre unitaire, et de minimiser la propagation d'erreurs dans les itérations. Dans l'invention, cette normalisation de l'énergie se fait en parallèle pour les signaux reçus sur chacune des $N_R$ antennes de réception.

Ainsi, un signal $x_k$ en entrée d'un tel CAG est transformé en un signal $y_k$ de la façon suivante :

$$y_k = \alpha_k \cdot x_k$$

Le coefficient $\alpha_k$ peut notamment être déterminé par :

$$\begin{cases} G_k = G_{k-1} + \mu\left(1 - |y_k|^2\right) \\ \alpha_k = \sqrt{G_k} \end{cases}$$

où $\mu$ est le pas d'adaptation, et où $G_k$ est une variable temporaire.

Comme indiqué précédemment, le mode de réalisation décrit jusqu'à présent s'appliquait à un canal MIMO non sélectif en fréquence, dans lequel le signal de données ne subissait pas ou peu d'interférences entre symboles. On décrit désormais en relation avec les figures 7 et 8 une variante de réalisation de l'invention dans le cas où cette hypothèse n'est pas vérifiée.

Lorsque le canal est sélectif en fréquence, on prévoit l'utilisation d'une modulation multi-porteuses telle que l'OFDM ("Orthogonal Frequency Division Multiplexing") (décrite par exemple par B. Le Floch, M. Alard et C. Berrou, dans "Coded Orthogonal Frequency Division Multiplex", Proceedings of the IEEE, Viol. 83, N° 6, juin 1995). En effet, un canal à évanouissement plat en fréquence est équivalent à un canal multitrajets (à évanouissements en fréquence) pour lequel on a procédé à une modulation OFDM du signal.

On pourrait également utiliser tout autre type de modulation multiporteuse, telle qu'une modulation mettant en oeuvre la fonction prototype IOTA, décrite par exemple dans le document de brevet européen EP 0 824 812.

Le schéma d'émission utilisé est alors celui de la figure 7. Il diffère du schéma d'émission décrit précédemment en relation avec la figure 1 uniquement en ce qu'après la conversion série/parallèle S/P 14, 74, et avant émission du signal sur chacune des N, antennes d'émission $15_1$ à $15_{Nt}$, $75_1$ à $75_{Nt}$, on procède à une modulation multiporteuse de type OFDM 79 sur chacune des voies d'émission. Les autres blocs étant identiques, ils ne sont pas décrits ici plus en détails.

Selon cette variante, le récepteur de l'invention est modifié selon le schéma de la figure 8. Il diffère du récepteur de la figure 3 uniquement en ce que le signal reçu sur chacune des $N_R$ antennes d'émission $85_1$ à

$85_{N_R}$, avant égalisation 80, subit une démodulation OFDM 89, notée OFDM$^{-1}$. Les autres blocs sont identiques à ceux de la figure 3 et ne sont donc pas décrits ici plus en détails.

Par exemple, le bloc de modulation OFDM 79 de la figure 7 prend $N_{FFT}$ symboles et rend un bloc de $N_{FFT} + \Delta$ symboles, où $\Delta$ désigne l'intervalle de garde de la modulation OFDM. L'opération duale OFDM$^{-1}$ 89 est effectuée en réception. A la condition que l'intervalle de garde $\Delta$ soit bien dimensionné (i.e. qu'il soit supérieur au retard maximal $\tau_{max}$ du canal), le canal équivalent correspondant à l'ensemble constitué du modulateur OFDM 79, du canal de propagation MIMO et du démodulateur OFDM$^{-1}$ 89 est équivalent à un canal non sélectif en fréquence pour chaque sous-porteuse. Il suffit donc d'appliquer le récepteur itératif proposé pour chaque sous-porteuse, comme exposé plus en détail ci-dessous.

On utilise les notations suivantes :

    **d** : signal binaire
    **H**$(k)$ : Matrice du canal pour la sous-porteuse k
    **G**$(k)$ = **H**$^H(k) \cdot$ **H**$(k)$ : matrice globale
    **J**$(k)$ = **G**$(k)$ -$diag$(**G**$(k)$) : matrice d'interférences

$\widetilde{\mathbf{s}}^{(p)}(k)$ : signal M-aire égalisé à l'itération p pour la sous-porteuse k
$\hat{\mathbf{s}}^{(p)}(k)$ : signal M-aire estimé à l'itération p pour la sous-porteuse k
$\hat{\mathbf{d}}^{(p)}$ : signal binaire estimé à l'itération p
r(k) : signal reçu après démodulation OFDM sur la sous-porteuse k
$\sigma^2 = 1/SNR$ : variance du bruit équivalent, également égal à l'inverse du rapport signal à bruit moyen observé sur chaque antenne (SNR)

Pour la première itération (p=1), puisque qu'aucun signal M-aire estimé n'est disponible, on procède à une étape d'initialisation qui comprend, pour chaque porteuse k, des sous-étapes de :

-    égalisation 50 du signal reçu par multiplication d'une matrice d'égalisation globale, $(\mathbf{G}(k)+\sigma^2 I)^{-1}H^H (k)$ délivrant un signal M-aire égalisé $\widetilde{\mathbf{s}}^{(1)}(k)$;
-    estimation 56 du signal binaire à partir du signal M-aire égalisé $\widetilde{\mathbf{s}}^{(1)}(k)$ délivrant un signal binaire estimé $\hat{\mathbf{d}}^{(1)}$;
-    estimation 56 du signal **M**-aire à partir du signal égalisé $\widetilde{\mathbf{s}}^{(1)}(k)$ délivrant un signal Maire estimé $\hat{\mathbf{s}}^{(1)}(k)$.

Pour les itérations suivantes (p>1), on réalise, pour chaque porteuse k, des étapes de :

-    filtrage adapté $60_2$ du signal reçu $\mathbf{r}(k)$ par application de la matrice transconjuguée du canal $\mathbf{H}^H(k)$ délivrant un signal filtré ;
-    création $60_1$ des interférences à partir d'un signal M-aire estimé précédent $\hat{\mathbf{s}}^{(p-1)}(k)$ par multiplication à gauche dudit signal M-aire estimé précédent par une matrice d'interférences $\mathbf{J}(k)$ tenant compte au moins de la matrice de canal $\mathbf{H}(k)$ ;
-    soustraction des interférences au signal filtré délivrant un signal amélioré ;
-    égalisation $60_3$ du signal amélioré délivrant un signal M-aire égalisé $\widetilde{\mathbf{s}}^{(p)}(k)$ par application de la matrice $(diag(\mathbf{G}(k))+\sigma^2 I)^1$ tenant compte au moins de la matrice de canal $\mathbf{H}(k)$ ;
-    estimation 66 à partir du signal M-aire égalisé du signal binaire émis appelé signal binaire estimé ($\hat{\mathbf{d}}^{(p)}$;
-    estimation 66 à partir du signal égalisé du signal M-aire émis appelé signal M-aire estimé $\hat{\mathbf{d}}^{(p)}$.

On présente désormais, en relation avec la figure 9, un exemple de réalisation du récepteur de l'invention adapté à un schéma d'émission de type ST-BICM. On utilise $N_t = 4$ antennes d'émission, référencées $95_1$, $95_2$, $95_3$ et $95_4$ et $N_R = 4$ antennes de réception référencées $95_5$, $95_6$, $95_7$ et $95_8$. Le canal est à évanouissement plat.

La matrice de canal utilisé par le système itératif est la suivante :

$$H = \begin{bmatrix} h_{11} & h_{21} & h_{31} & h_{41} \\ h_{12} & h_{22} & h_{32} & h_{42} \\ h_{13} & h_{23} & h_{33} & h_{43} \\ h_{14} & h_{24} & h_{34} & h_{44} \end{bmatrix}$$

où, comme illustré sur la figure 9, $h_{ij}$ désigne le trajet séparant l'antenne d'émission d'indice i de l'antenne de réception d'indice j.

L'estimation de symbole 36, 86 s'effectue de la façon suivante :

- conversion M-aire/binaire $M^{-1}$ $33_1$, $83_1$ délivrant des rapports de vraisemblances sur le signal binaire codé entrelacé ;

- désentrelacement $\pi^{-1}$ $32_1$, $82_1$ (identique à l'entrelacement $\pi$ 12, 72 réalisé à l'émission) délivrant des rapports de vraisemblances sur le signal binaire codé ;

- décodage de canal $CC^{-1}$ 31, 81 délivrant un signal binaire estimé ainsi que des vraisemblances a posteriori sur le signal binaire codé ;

- entrelacement $\pi$ $32_2$, $82_2$ des rapports de vraisemblances a posteriori sur le signal binaire codé délivrant des rapports de vraisemblances a posteriori sur le signal binaire codé entrelacé ;

- conversion binaire/M-aire (mapping) M $33_2$, $83_2$ délivrant un signal estimé $\hat{s}$.

La figure 10 présente les performances du procédé de réception de l'invention obtenues par simulation à partir d'un codeur de canal convolutif de type K=7, où K est la longueur de contrainte du code, et d'une constellation de type QPSK ("Quadrature Phase Shift Keying" pour "modulation par décalage de phase en quadrature"). L'efficacité spectrale est donc de $\eta$ = 4bits/s/Hz.

Plus précisément, la figure 10 présente cinq courbes référencées 101 à 105 illustrant le taux d'erreur binaire (BER pour "Bit Error Rate") en fonction du rapport Eb/N0 (correspondant au rapport entre l'énergie dépensée par bit transmis et la densité spectrale du bruit blanc) exprimé en décibels (dB) pour les cinq premières itérations du récepteur de l'invention. Ainsi, la courbe référencée 101 correspond à la première itération, la courbe référencée 102 correspond à la deuxième itération et ainsi de suite jusqu'à la courbe référencée 105 qui correspond à la cinquième itération du récepteur itératif de l'invention.

La courbe référencée 106 sur la figure 10 correspond quant à elle à la courbe de performance théorique optimale pour un système de réception d'un signal de type ST-BICM.

Comme l'illustre la figure 10, le récepteur de l'invention présente des performances satisfaisantes puisqu'il converge au bout de quatre itérations environ. La convergence est par ailleurs relativement rapide. A Eb/N0 = 4 dB environ, le processus converge vers la courbe optimale 106 (ce qui est illustré par le rapprochement des courbes référencées 105 et 106), ce qui montre que le récepteur de l'invention est très performant.

Un récepteur de type ML (tel que proposé par Tonello par exemple et illustré en figure 2) ne peut par ailleurs pas dépasser la limite de performances illustrée par la courbe référencée 106 : on en déduit donc que les performances du récepteur de l'invention à haut rapport signal à bruit sont équivalentes à celles que donnerait le récepteur de l'art antérieur proposé par Tonello, et ce, avec une complexité moindre.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

**Revendications**

1. Procédé de réception d'un signal de données, mettant en oeuvre $N_R$ antennes de réception, où $N_R$ est supérieur ou égal à 2,
   ledit signal de données ayant subi, avant émission, un codage de canal et un multiplexage spatial, et étant émis sur $N_T$ antennes d'émission, où $N_T$ est supérieur ou égal à 2, chacune desdites antennes émettant une partie dudit signal,
   ledit procédé de réception mettant en oeuvre une étape d'estimation du canal de transmission entre lesdites antennes d'émission et lesdites antennes de réception, et comprenant au moins une itération d'amélioration d'une estimation du signal reçu, en fonction dudit signal reçu et d'une estimation précédente dudit signal reçu, ladite itération comprenant des étapes de :

   - filtrage dudit signal reçu, délivrant un signal filtré ;
   - détermination d'une interférence affectant ledit signal reçu, mettant en oeuvre une multiplication de ladite estimation précédente dudit signal reçu par une matrice représentative d'interférences dues au canal de transmission dudit signal reçu, dite matrice d'interférences J, ladite détermination délivrant une interférence estimée ;
   - soustraction de ladite interférence estimée audit signal filtré, de façon à obtenir un signal amélioré ;
   - égalisation dudit signal amélioré, délivrant un signal égalisé ;
- estimation, à partir dudit signal égalisé, du signal de données émis, appelé signal estimé.

**2.** Procédé de réception selon la revendication 1, **caractérisé en ce que** ledit filtrage dudit signal reçu met en oeuvre une multiplication dudit signal reçu par une matrice transposée conjuguée $H^H$ d'une matrice représentative dudit canal de transmission H.

**3.** Procédé de réception selon l'une quelconque des revendications 1 et 2, **caractérisé en ce que** la première itération d'amélioration met en oeuvre une estimation initiale dudit signal reçu comprenant des étapes de :

- égalisation initiale dudit signal reçu par multiplication d'une matrice d'égalisation globale tenant compte au moins de ladite matrice représentative dudit canal de transmission H, délivrant un signal initial égalisé ;
- estimation initiale dudit signal reçu à partir dudit signal initial égalisé.

**4.** Procédé de réception selon l'une quelconque des revendications 1 à 3, **caractérisé en ce que**, lorsque ledit canal de transmission est sélectif en fréquence, ledit signal de données émis sur chacune desdites antennes d'émission est un signal multiporteuses et **en ce que** ladite itération comprend une étape préliminaire de démodulation multiporteuses sur chacune desdites antennes de réception.

**5.** Procédé de réception selon l'une quelconque des revendications 1 à 4, **caractérisé en ce qu'**au moins une desdites étapes d'estimation du signal reçu délivre d'une part une estimation binaire dudit signal reçu, et d'autre part une estimation pondérée dudit signal reçu, ladite estimation pondérée étant utilisée pour l'itération suivante, si cette dernière existe.

**6.** Procédé de réception selon l'une quelconque des revendications 3 à 5, **caractérisé en ce qu'**il comprend également une étape d'estimation d'un bruit affectant ledit canal de transmission, et **en ce que**, lorsque ladite égalisation est de type Minimum Mean Square Error, MMSE pour erreur quadratique moyenne minimale, ladite matrice d'égalisation globale tient aussi compte dudit bruit estimé.

**7.** Procédé de réception selon l'une quelconque des revendications 1 à 5, **caractérisé en ce que** ladite égalisation est de type Zero Forcing, ZF pour forçage à zéro.

**8.** Procédé de réception selon l'une quelconque des revendications 1 à 7, **caractérisé en ce qu'**il comprend également au moins une étape de contrôle automatique de gain, CAGA, précédant lesdites étapes d'égalisation.

**9.** Récepteur d'un signal de données, comprenant $N_R$ antennes de réception ($35_1$ à $35_{NR}$), où $N_R$ est supérieur ou égal à 2, ledit signal de données ayant subi, avant émission, un codage de canal et un multiplexage spatial, et étant émis sur $N_T$ antennes d'émission ($15_1$ à $15_{Nt}$), où $N_T$ est supérieur ou égal à 2, chacune desdites antennes ($15_1$ à $15_{Nt}$) émettant une partie dudit signal, ledit récepteur comprenant des moyens d'estimation d'un canal de transmission entre lesdites antennes d'émission et lesdites antennes de réception, et comprenant des moyens d'amélioration d'une estimation du signal reçu (r), en fonction dudit signal reçu (r) et d'une estimation précédente dudit signal reçu (r), comprenant au moins deux modules élémentaires (Ite1, Ite2) pilotés successivement, chacun desdits modules élémentaires (Ite1, Ite2) comprenant :

- des moyens de filtrage ($60_2$) dudit signal reçu (r), délivrant un signal filtré ;
- des moyens de détermination ($60_1$) d'une interférence affectant ledit signal reçu (r), mettant en oeuvre une multiplication de ladite estimation précédente dudit signal reçu (r) par une matrice représentative d'interférences dues au canal de transmission dudit signal reçu (r), dite matrice d'interférences J, lesdits moyens de détermination délivrant une interférence estimée ;
- des moyens de soustraction de ladite interférence estimée audit signal filtré, de façon à obtenir un signal amélioré ;
- des moyens d'égalisation ($60_3$) dudit signal amélioré, délivrant un signal égalisé ;
- des moyens d'estimation (66), à partir dudit signal égalisé, du signal de données émis, appelé signal estimé.

**10.** Produit programme d'ordinateur **caractérisé en ce qu'**il comprend des séquences d'instructions adaptées à la mise en oeuvre d'un procédé de réception selon l'une quelconque des revendications 1 à 8 lorsque ledit programme est exécuté sur un ordinateur.

**Claims**

**1.** Method for receiving a data signal, implementing $N_R$ receiving antennas, in which $N_R$ is greater than or equal to 2, said data signal having undergone, before transmission, a channel coding and a spatial multiplexing, and being transmitted on $N_T$ transmitting antennas, in which $N_T$ is greater than or equal to 2, each of said antennas transmitting part of said signal,

said receiving method implementing a step for estimating the transmission channel between said transmitting antennas and said receiving antennas, and comprising at least one iteration for enhancing an estimation of the received signal, according to said received signal and a preceding estimation of said received signal, said iteration comprising the hollowing steps:

- filtering of said received signal, delivering a filtered signal;
- determination of an interference affecting said received signal, implementing a multiplication of said preceding estimation of said received signal by a matrix representative of interferences due to the transmission channel of said received signal, called interferences matrix J, said determination delivering an estimated interference;
- subtraction of said estimated interference from said filtered signal, so as to obtain an enhanced signal;
- equalization of said enhanced signal, delivering an equalized signal;
- estimation, from said equalized signal, of the transmitted data signal, called estimated signal.

2. Receiving method according to Claim 1, **characterized in that** said filtering of said received signal implements a multiplication of said received signal by a conjugate transpose matrix $H^H$ of a matrix representative of said transmission channel H.

3. Receiving method according to any one of Claims 1 and 2, **characterized in that** the first enhancement iteration implements an initial estimation of said received signal comprising the following steps:

- initial equalization of said received signal by multiplication of a global equalization matrix taking into account at least said matrix representative of said transmission channel H, delivering an equalized initial signal;
- initial estimation of said received signal from said equalized initial signal.

4. Receiving method according to any one of Claims 1 to 3, **characterized in that**, when said transmission channel is frequency selective, said data signal transmitted on each of said transmitting antennas is a multi-carrier signal and **in that** said iteration comprises a preliminary multicarrier demodulation step on each of said receiving antennas.

5. Receiving method according to any one of Claims 1 to 4, **characterized in that** at least one of said received signal estimation steps delivers, on the one hand, a binary estimation of said received signal, and, on the other hand, a weighted estimation of said received signal, said weighted estimation being used for the next iteration, if there is a next iteration.

6. Receiving method according to any one of Claims 3 to 5, **characterized in that** it also comprises a step for estimation of a noise affecting said transmission channel, and **in that**, when said equalization is of minimum mean square error, MMSE, type, said global equalization matrix also takes account of said estimated noise.

7. Receiving method according to any one of Claims 1 to 5, **characterized in that** said equalization is of zero forcing, ZF, type.

8. Receiving method according to any one of Claims 1 to 7, **characterized in that** it also comprises at least one automatic gain control, AGC, step, preceding said equalization steps.

9. Receiver of a data signal, comprising $N_R$ receiving antennas ($35_1$ to $35_{NR}$), in which $N_R$ is greater than or equal to 2,

said data signal having undergone, before transmission, a channel coding and a spatial multiplexing, and being transmitted on $N_T$ transmitting antennas ($15_1$ to $15_{Nt}$), in which $N_T$ is greater than or equal to 2, each of said antennas ($15_1$ to $15_{Nt}$) transmitting part of said signal, said receiver comprising means for estimating a transmission channel between said transmitting antennas and said receiving antennas, and comprising means for enhancing an estimation of the received signal (r), according to said received signal (r) and a preceding estimation of said received signal (r), comprising at least two individual modules (Ite1, Ite2) driven in succession, each of said individual modules (Itel, Ite2) comprising:

- filtering means ($60_2$) for filtering said received signal (r), delivering a filtered signal;
- determination means ($60_1$) for determining an interference affecting said received signal (r), implementing a multiplication of said preceding estimation of said received signal (r) by a matrix representative of interferences due to the transmission channel of said received signal (r), called interferences matrix J, said determination means delivering an estimated interference;
- subtraction means for subtracting said estimated interference from said filtered signal, so as to obtain an enhanced signal;
- equalization means ($60_3$) for equalizing said enhanced signal, delivering an equalized signal;
- estimation means (66) for estimating, from said equalized signal, the transmitted data signal, called estimated signal.

**10.** Computer program product, **characterized in that** it comprises sequences of instructions suitable for implementing a receiving method according to any one of Claims 1 to 8 when said program is run on a computer.

**Patentansprüche**

**1.** Verfahren zum Empfang eines Datensignals, das $N_R$ Empfangsantennen einsetzt, wobei $N_R$ größer als oder gleich 2 ist, wobei das Datensignal vor dem Senden eine Kanalcodierung und ein räumliches Multiplexen erfahren hat und auf $N_T$ Sendeantennen gesendet wird, wobei $N_T$ größer als oder gleich 2 ist, wobei jede der Antennen einen Teil des Signals sendet, wobei das Empfangsverfahren einen Schritt der Schätzung des Übertragungskanals zwischen den Sendeantennen und den Empfangsantennen durchführt und mindestens eine Verbesserungsiteration einer Schätzung des empfangenen Signals abhängig vom empfangenen Signal und von einer vorhergehenden Schätzung des empfangenen Signals enthält, wobei die Iteration die folgenden Schritte enthält:

- Filterung des empfangenen Signals, die ein gefiltertes Signal liefert;
- Bestimmung einer sich auf das empfangene Signal auswirkenden Interferenz, die eine Multiplikation der vorhergehenden Schätzung des empfangenen Signals mit einer Matrix durchführt, die für durch den Übertragungskanal des empfangenen Signals bedingte Interferenzen repräsentativ ist, Interferenzmatrix J genannt, wobei die Bestimmung eine geschätzte Interferenz liefert;
- Subtraktion der geschätzten Interferenz vom gefilterten Signal, um ein verbessertes Signal zu erhalten;
- Entzerrung des verbesserten Signals, die ein entzerrtes Signal liefert;
- Schätzung, ausgehend von dem entzerrten Signal, des gesendeten Datensignals, geschätztes Signal genannt.

**2.** Empfangsverfahren nach Anspruch 1, **dadurch gekennzeichnet, dass** die Filterung des empfangenen Signals eine Multiplikation des empfangenen Signals mit einer konjugierten transponierten Matrix $H^H$ einer für den Übertragungskanal H repräsentativen Matrix durchführt.

**3.** Empfangsverfahren nach einem der Ansprüche 1 und 2, **dadurch gekennzeichnet, dass** die erste Verbesserungsiteration eine Anfangsschätzung des empfangenen Signals durchführt, die die folgenden Schritte enthält:

- Anfangsentzerrung des empfangenen Signals durch Multiplikation einer globalen Entzerrungsmatrix unter Berücksichtigung mindestens der für den Übertragungskanal H repräsentativen Matrix, die ein entzerrtes Anfangssignal liefert;
- Anfangsschätzung des empfangenen Signals ausgehend vom entzerrten Anfangssignal.

**4.** Empfangsverfahren nach einem der Ansprüche 1 bis 3, **dadurch gekennzeichnet, dass**, wenn der Übertragungskanal frequenzselektiv ist, das auf jeder der Sendeantennen gesendete Datensignal ein Mehrträgersignal ist, und dass die Iteration einen vorhergehenden Schritt der Mehrträger-Demodulation auf jeder der Empfangsantennen enthält.

**5.** Empfangsverfahren nach einem der Ansprüche 1 bis 4, **dadurch gekennzeichnet, dass** mindestens einer der Schritte der Schätzung des empfangenen Signals einerseits eine binäre Schätzung des empfangenen Signals und andererseits eine gewichtete Schätzung des empfangenen Signals liefert, wobei die gewichtete Schätzung für die folgende Iteration verwender wird, wenn letztere existiert.

**6.** Empfangsverfahren nach einem der Ansprüche 3 bis 5, **dadurch gekennzeichnet, dass** es ebenfalls einen Schritt der Schätzung eines sich auf den Übertragungskanal auswirkenden Rauschens enthält, und dass, wenn die Entzerrung von der Art Minimum Mean Square Error, MMSE, für minimaler mittlerer quadratischer Fehler, ist, die globale Entzerrungsmatrix auch das geschätzte Rauschen berücksichtigt.

**7.** Empfangsverfahren nach einem der Ansprüche 1 bis 5, **dadurch gekennzeichnet, dass** die Entzerrung von der Art Zero Forcing, ZF, ist.

**8.** Empfangsverfahren nach einem der Ansprüche 1 bis 7, **dadurch gekennzeichnet, dass** es ebenfalls mindestens einen Schritt der automatischen Verstärkungssteuerung CAG vor den Entzerrungsschritten enthält.

**9.** Empfänger eines Datensignals, der $N_R$ Empfangsantennen ($35_1$ bis $35_{NR}$) enthält, wobei $N_R$ größer als oder gleich 2 ist, wobei das Datensignal vor dem Senden eine Kanalcodierung und ein räumliches Multiplexen erfahren hat und auf $N_T$ Sendeantennen ($15_1$ bis $15_{Nt}$) gesendet wird, wobei $N_T$ größer als oder gleich 2 ist, wobei jede der Antennen ($15_1$ bis $15_{Nt}$) einen Teil des Signals sendet, wobei der Empfänger Einrichtungen zur Schätzung eines Übertragungskanals zwischen den Sendeantennen und den Empfangsantennen enthält, und Einrichtungen zur Verbesserung einer Schätzung des empfangenen Signals (r) abhängig von dem empfangenen Signal (r) und von einer vorhergehenden Schätzung des empfangenen Signals (r) enthält, die mindestens zwei Elementarmodule (Ite1, Ite2) enthalten, welche nacheinander gesteuert werden, wobei jedes der Elementarmodule (Ite1, Ite2) enthält:

- Einrichtungen ($60_2$) zum Filtern des empfangenen Signals (r), die ein gefiltertes Signal liefern;
- Einrichtungen ($60_1$) zur Bestimmung einer sich auf das empfangene Signal (r) auswirkenden Interferenz, die eine Multiplikation der vorhergehenden Schätzung des empfangenen Signals (r) mit einer Matrix durchführen, die für durch den Übertragungskanal des empfangenen Signals (r) bedingte Interferenzen repräsentativ ist, Interferenzmatrix J genannt, wobei die Bestimmungseinrichtungen eine geschätzte Interferenz liefern;
- Einrichtungen zur Subtraktion der geschätzten Interferenz vom gefilterten Signal, um ein verbessertes Signal zu erhalten;
- Einrichtungen ($60_3$) zur Entzerrung des verbesserten Signals, die ein entzerrtes Signal liefern;
- Einrichtungen (66) zur Schätzung, ausgehend von dem entzerrten Signal, des gesendeten Datensignals, geschätztes Signal genannt.

10. Computerprogrammprodukt, **dadurch gekennzeichnet, dass** es Folgen von Anweisungen enthält, die für die Durchführung eines Empfangsverfahrens nach einem der Ansprüche 1 bis 8 geeignet sind, wenn das Programm auf einem Computer ausgeführt wird.

Fig. 1

Fig. 2

Fig. 3

Fig. 4

$$50 \qquad 56$$

$$r \rightarrow \boxed{\phantom{50}} \xrightarrow{\tilde{s}^{(1)}} \boxed{\phantom{56}} \rightarrow \hat{d}^{(1)}$$
$$\rightarrow \hat{s}^{(1)}$$

<u>Fig. 5</u>

$$60_1 \qquad 60$$

$$\hat{s}^{(p-1)} \rightarrow \boxed{\phantom{60_1}}$$

$$60_2 \qquad 60_3$$

$$r \rightarrow \boxed{H^H} \rightarrow \oplus \xrightarrow{} \boxed{\phantom{60_3}} \xrightarrow{\tilde{s}^{(p)}} \boxed{66} \rightarrow \hat{d}^{(p)}$$
$$\rightarrow \hat{s}^{(p)}$$

<u>Fig. 6</u>

$$70 \quad 71 \qquad 72 \qquad 73 \qquad 74 \qquad 79$$

$$\rightarrow \boxed{CC} \rightarrow \boxed{\Pi} \rightarrow \boxed{M} \rightarrow \boxed{S/P} \rightarrow \boxed{OFDM} \rightarrow Y \; 75_1$$
$$\rightarrow \boxed{OFDM} \rightarrow Y \; 75_2$$
$$79$$
$$\rightarrow \boxed{OFDM} \rightarrow Y \; 75_{N_t}$$
$$79$$

<u>Fig. 7</u>

15

Fig. 8

Fig. 9

Fig. 10

## RÉFÉRENCES CITÉES DANS LA DESCRIPTION

**Documents brevets cités dans la description**

- US 2004161058 A

- EP 0824812 A

**Littérature non-brevet citée dans la description**

- **A. M. Tonello.** Space-Time Bit-Interleaved Coded Modulation with an Iterative Decoding Strategy. *Proceedings of VTC Fall'00,* Septembre 2000

- **B. Le Floch ; M. Alard ; C. Berrou.** Coded Orthogonal Frequency Division Multiplex. *Proceedings of the IEEE,* Juin 1995, vol. 83 (6